# EUROPEAN PATENT SPECIFICATION

(11) **EP 3 821 048 B1**
(45) Date of publication and mention of the grant of the patent: **24.07.2024**
(21) Application number: 19762165.9
(22) Date of filing: 05.09.2019
(51) Int. Cl.: C22C 21/00, C22C 21/02, C22C 21/10, B23K 35/28, B23K 35/02, B32B 15/01, C22F 1/04, C22F 1/053, B23K 1/00, F28F 21/08, F28F 1/12, F28F 9/02, F28D 1/053

(54) **ALUMINIUM ALLOY FIN STOCK MATERIAL**
RIPPENMATERIAL AUS ALUMINIUMLEGIERUNGSMATERIAL
MATÉRIAU D'AILETTE DE STOCK EN ALLIAGE D'ALUMINIUM

(30) Priority: 24.09.2018 EP 18196278
(43) Date of publication of application: 19.05.2021
(73) Proprietor: Novelis Koblenz GmbH, 56070 Koblenz (DE)
(72) Inventor: WARBY, David Ian, Reading RG5 4RL (GB); VAN DER DONK, Henricus Matheus, 1991 LW Velserbroek (NL); JACOBY, Bernd, 65553 Limburg (DE); BÜRGER, Achim, 56203 Höhr-Grenzhausen (DE); KIRKHAM, Steven, 56235 Ransbach-Baumbach (DE)
(74) Representative: Weickmann & Weickmann PartmbB
(86) International application number: PCT/EP2019/073661
(87) International publication number: WO 2020/064291

(56) References cited:
- EP-A1- 1 435 397
- WO-A1-03/054242
- WO-A1-2005/045080
- WO-A1-2012/148988
- WO-A1-2016/190409
- CN-A- 103 060 622
- JP-A- 2006 176 850
- JP-A- 2006 176 852
- US-A1- 2014 130 637

## Description

### FIELD OF THE INVENTION

The invention relates to a rolled fin stock material from a 3xxx-series aluminium alloy comprising at least 1.3% to 2.0% Mn. The invention further relates to a brazed assembly of components incorporating such a fin stock material.

### BACKGROUND TO THE INVENTION

As will be appreciated herein below, except as otherwise indicated, aluminium alloy designations and temper designations refer to the Aluminium Association designations in Aluminium Standards and Data and the Registration Records, as published by the Aluminium Association in 2018 and are well known to the person skilled in the art.

For any description of alloy compositions or preferred alloy compositions, all references to percentages are by weight percent unless otherwise indicated.

The term "up to" and "up to about", as employed herein, explicitly includes, but is not limited to, the possibility of zero weight-percent of the particular alloying element to which it refers. For example, up to about 0.3% Ni may include an alloy having no Ni.

Heat exchangers and other similar equipment, such as condensers, evaporators and the like for use in car coolers, air conditioning systems, industrial cooling systems, etc. usually comprise a number of heat exchange tubes arranged in parallel between two headers, each tube joined at either end to one of the headers. Corrugated fins are disposed in an airflow clearance between adjacent heat exchange tubes and are brazed to the respective tubes.

The fin material or fin stock material for brazed heat exchangers is typically fabricated from 3xxx-series aluminium alloys such as, for example AA3003 or AA3003 with a purposive addition of Zn up to 3%.

The fin stock material is joined to the heat exchange tubes in a brazing operation employing an aluminium alloy brazing filler, most commonly made from an AA4xxx-series alloy. The brazing filler is typically present on the outer surface of the heat exchange tube, but also the use of a clad fin configuration alone is being employed.

The most used brazing processes used on an industrial scale are vacuum brazing and controlled atmosphere brazing using a salt-based brazing flux material. A more recent development concerns controlled atmosphere brazing without the use of salt-based brazing flux material.

US patent no. 9,493,861-B1 discloses a method for producing AlMn strip or sheet for making components by brazing, in particular to fin materials used in heat exchangers. The resultant fin material is said to have an increased sagging resistance. The aluminium alloy comprises, in wt.%: 0.3-1.5% Si, <0.5% Fe, <0.3% Cu, 1.0-2.0% Mn, <0.5% Mg, <4.0% Zn, 0.3% each of dispersoid forming elements from the group IVb, Vb, or VIb, and unavoidable impurities, balance aluminium.

US patent no. 9,714,799 discloses a method for producing AlMn strip or sheet for making components by brazing, in particular to fin materials used in heat exchangers. The resultant fin material is said to have an ultra-sagging resistance. The aluminium alloy comprises, in wt.%: <0.30% Si, <0.5% Fe, <0.3% Cu, 1.0-2.0% Mn, <0.5% Mg, <4.0% Zn, 0.3% each of dispersoid forming elements from the group IVb, Vb, or VIb, and unavoidable impurities, balance aluminium.

CN-103060622-A discloses a method for producing fins for an automotive heat exchanger by continuous roll casting of an Al-Mn-Zn-Sc aluminium alloy, the aluminium alloy having 0.05-0.15% Sc, 0.44-0.58% Si, 0.45-0.55% Fe, 0.10-0.15% Cu, 1.05-1.25% Mn, <0.05% Mg, 1.40-1.60% Zn, <0.025% Cr, <0.045% Ni, <0.045% Ti, <0.045% Zr, and the balance aluminium.

JP-2006-176852-A discloses a brazing sheet product having a core alloy clad on one side with an Al-Si or Al-Si-Zn based brazing alloy and on the other side an aluminium alloy sacrificial anode layer. The aluminium alloy sacrificial anode layer contains 0.0001-1.0% Sc and 0.2-0.8% Zn, and one or more elements selected from the group of 0.005-3.0% Mn, 0.05-2.5% Fe, 0.05-1.5% Si, <0.1% Cu, 0.01-2.0% Mg and 0.001-0.3% Zr, and the balance aluminium and inevitable impurities. The brazing sheet product can be used for tubes or fins in a heat exchanger.

JP-2006-176850-A discloses an aluminium alloy fin material for a heat exchanger, and comprising 0.0001-1.0% Sc, 0.005-3.0% Mn and 0.01-8.0% Zn, and further one or more elements selected from 0.05-2.5% Fe, 0.05-1.5% Si, 0.05-0.8% Cu, 0.01-0.5% Mg and 0.001-0.3% Zr, and the balance aluminium and inevitable impurities.

WO-2016/190409-A1 discloses a high-strength 6XXX-series aluminium alloy automotive sheet for panel components and automobile structural components, the aluminium alloy comprising, 0.3-1.5% Mg, 0.3-1.5% Si, and at least one transition element selected from the group consisting of 0.1-0.8% Mn, 0.04-0.20% Zr, 0.04-0.20% Cr, and 0.02-0.1% Sc, balance aluminium and unavoidable impurities, and wherein the sheet at mid-thickness has an average grain size of 100 micron or less, and dispersoid particles comprising the at least one transition element of a defined average equivalent circle diameter and density.

There is room for improvement in the art of aluminium alloy fin stock material for use in brazed heat exchangers and having a further improved sagging resistance.

### DESCRIPTION OF THE INVENTION

It is an object of the invention to provide a rolled aluminium alloy fin stock material for brazed heat exchangers having at least an improved sagging resistance.

This and other objects and further advantages are met or exceeded by the present invention. The invention is defined in the appended claims.

In accordance with the present invention it has been found that the rolled fin stock material has a high post-braze strength combined with excellent brazing performance in terms of a high sagging resistance and a very low susceptibility to liquid core penetration during brazing, as well as good forming properties in the as-delivered condition. In particular the sagging resistance at elevated temperature has been significantly improved due to the combined addition of Sc and Zr to the aluminium alloy

The rolled fin stock material is mainly intended for thin fin applications in heat exchangers produced by CAB brazing but can also be produced by vacuum brazing.

Mn is the most important alloying element in the fin stock material and contributes to both particle and solid solution strengthening. Furthermore, Mn in a controlled number of particles is beneficial to control the sagging resistance and sensitivity to liquid core penetration as these particles control the recrystallisation process during braze heating leading to the formation of large recrystallised grains. The Mn content is in the range of 1.3% to 2.0%. A more preferred upper limit for the Mn content is 1.85%.

Si contributes combined with Mn to both particle and solid solution strengthening. This promotes high post-braze strength and sagging resistance. An insufficient Si content, for example of less than 0.4%, results in reduced strengthening while too much Si, for example more than 1.5%, results in decreased thermal conductivity and a reduced melting temperature undesirably affecting the heat exchanger during the brazing operations. A preferred lower limit for the Si content is 0.5%, and more preferably 0.65%. The upper limit for the Si content is 1.5%, preferably 1.2%, and most preferably 1.1%.

Fe is present in all known commercially available aluminium alloys. With a too high Fe content among other things the formability of the material decreases and also the corrosion performance is decreasing. The admissible Fe content is up to 0.8% maximum, and more preferably up to 0.6% maximum. A practical Fe content is in the range of 0.15% to 0.45% and allows for a good compromise in desired properties of the fin stock material such as post-braze strength and sagging resistance, while the fin stock material can be manufactured without great difficulties at least in part from scrap materials.

The fin stock material may have relatively high levels of Mn, Si and Fe without departing from the concept of the present invention. In particular when high solidification rates during casting, typically as obtained by continuous casting such as twin-roll casting, are applied in the manufacturing process of producing the fin stock material the relatively high levels of alloying elements can be employed resulting in an alloy strip substantially without coarse intermetallics. When applying continuous casting techniques to produce feedstock for the fin stock material clearly also the lower and middle end of the disclosed ranges can be applied. In casting processes like direct chill (DC) casting of slabs or billets the solidification rates are such that in industrial practice the Fe level commonly does not exceed 0.6%, the Mn level does not exceed 1.85%, and the Si level does not 1.2%, otherwise detrimental coarse intermetallics can be produced, such as for example, primary Fe-bearing intermetallics. The exact Si, Fe and Mn-contents are tuned based on the formability, strength, corrosion resistance and sag resistance requirements of the specific application.

Together with the Mn and Si, the purposive addition of scandium (Sc) in combination with the Zr is an essential alloying element and the Sc is present in a range of 0.01% to 0.6% to arrive at improved sagging resistance at elevated temperatures. Also the strength properties in the post-braze condition at elevated temperatures are increased. A preferred lower limit for the Sc is 0.05%, and more preferably 0.12%, and more preferably 0.17%. A more preferred upper-limit is 0.4%, and more preferably 0.30%.

The aluminium alloy should contain also at least Zr in a range of 0.02% to 0.40%. In an embodiment the upper-limit for the Zr-content is 0.30%, and more preferably 0.2%. A preferred lower-limit for the Zr-content is 0.06%, and more preferably 0.08%.

Zr combines with Sc to form a dispersoid having a reduced lattice mismatch between the dispersoid and aluminium matrix, which results in an enhanced inhibition of recrystallisation and thus leading to a higher recrystallisation temperature. The combined Sc and Zr addition favours the formation of larger post-braze grains after recrystallisation during the brazing heat-up and thereby increasing the sagging resistance. The increase is significantly higher compared to the addition of solely Sc or solely Zr in a similar compositional range. In the aluminium alloy according to the invention there must be a combined addition of at least Sc and Zr in order to achieve the desired post-braze strength properties. In an embodiment the combined addition of Sc and Zr is at least 0.20%, and preferably at least 0.23%. In the better examples the combined addition of Sc and Zr is at least 0.25%.

The addition of Mg increases the post-braze strength of the fin stock alloy significantly, but at too high levels it may increase the risk of incipient melting of phases in the fin stock material during the brazing operation. For controlled atmosphere brazing (CAB) higher Mg contents are not desired because of a potential poisoning effect on the brazing flux material. When employed in a vacuum brazing operation the Mg content in the fin stock alloy is much less critical and can be present up to 2%. The Mg content can be present up to 2%, preferably up to 0.5%, preferably up to 0.35%, and most preferably up to 0.10%.

Cu can enhance the post-braze strength of the fin stock material, however, it can have a detrimental influence on the corrosion potential of the fin material. Cu may be tolerated up to 0.5%, this achieves advantages in the tolerance of this fin stock alloy for impurity elements and allows this alloy to be composed from large amounts of scrap material, such as discarded heat exchangers, but not limited to this example. A more preferred range for the Cu-level is up to 0.30%, and more preferably up to 0.20%, as a compromise in achieving post-braze strength, corrosion resistance and brazeability. If the corrosion resistance prevails as very important property for the use of the fin stock material in a certain heat exchanger application, then the Cu content is preferably kept at levels below 0.20%, and most preferably below 0.05%, for example at a level of not more than 0.01% or 0.02%.

The alloying element zinc (Zn) affects the corrosion potential of the fin stock material and can be present up to 4%. By reducing the corrosion potential of the fin stock, Zn has the effect of causing the fins to function as sacrificial anodes, thereby providing corrosion protection for the tubes of the heat exchanger to which they are brazed. Zinc has a detectable, but relatively small effect on the strength and thermal conductivity. For this reason, a minimum amount of Zn required for cathodic protection of the tube is added; usually that will require at least 0.35% Zn, and more preferably at least 0.5%. More than 4% Zn will have an impact on the self-corrosion rate. However, in some instances, such higher Zn contents of up to 3% Zn might be desirable at the expense of thermal conductivity and self-corrosion properties. By using an adjustable Zn content in the fin, the difference in corrosion potential between tubes and fins can be chosen to an adequate level for each application. A preferred upper limit for the Zn content is 2.7%. In a particular embodiment, the upper limit for the Zn content is 1.9%.

Ni has been shown to promote strength without a significant detrimental influence on thermal conductivity. It is known, however, to have a negative impact on the self-corrosion characteristics of the fin stock material. It is envisioned that up to 0.3% might be tolerated in some specific instances, however, in general, Ni should be kept to less than 0.05%, and preferably less than 0.03%.

Cr can be added up to 0.3% as another dispersoid forming element.

Ti may be present up to 0.3% to act in particular as a grain refining additive during the casting of an ingot of the fin stock material of the invention. Additional Ti may be added, for example due to their presence in scrap material, to increase the strength of the fin alloy by solubility hardening. The total amount of Ti present in the aluminium alloy should preferably not exceed 0.20%, but preferably is less than 0.10%.

The balance is made by aluminium and incidental impurities and tolerable impurities, each up to 0.05% maximum and in total 0.25% maximum, and preferably in total not exceeding 0.15%.

In a particular embodiment of the aluminium fin stock material it concerns a composition consisting of, in wt.%: Mn 1.3-2.0%, Si 0.4-1.5%, Zn up to 4%, Fe up to 0.8%, Zr 0.02-0.40%, Sc 0.01-0.6%, Ni up to 0.3%, Cu up to 0.5%, Mg up 2%, Cr up to 0.3%, Ti up to 0.3%, the balance aluminium and impurities each <0.05%, total <0.25%, and with preferred narrower compositional ranges as herein described and claimed.

The rolled fin stock material can be manufactured using method of producing fin stock material known in the art, for example those disclosed is US patent no. 9,493,861-B1 and 9,714,799-B2.

For the casting of the rolling feedstock a continuous casting technique, e.g. twin-belt casting or roll casting, is favoured over a direct chill (DC) type casting technique. The relative high cooling rate during a continuous casting operation provides a more favourable and fine distribution of dispersoid particles and other microstructural features resulting in the high required post-braze strength combined with an increased sagging resistance, in particular at elevated temperatures.

In view of the presence for the Sc and Zr as alloying elements, to produce the optimum performance of the aluminium alloy as fin stock material, the homogenisation temperature and/or the pre-heat temperature prior to hot rolling is in the range of 300°C to 500°C, and more preferably in the range of 370°C to 480°C, to control the formation of small dispersoid particles. The soaking time is typically in a range of 1 to 50 hours.

Following the homogenisation and/or pre-heat step, a hot rolling step can be performed. The hot-mill entry temperature is preferably in a range of 350°C and 470°C. The aluminium alloy is hot rolled to a gauge of 2 mm to 15 mm, and subsequently cold rolled to final gauge. Optionally, the rolled aluminium sheet can be annealed by heating the sheet from room temperature to an annealing temperature regular in the art to arrive at the required temper.

In an embodiment the rolled fin stock material is provided with an aluminium alloy clad layer on one or both sides, using cladding layer thicknesses of 3% to 20%, preferably 3% to 15%, of the total thickness of the strip on each side. The aluminium alloy clad layer may be a 4xxx-series filler alloy typically having Si in a range of 5% to 14% as its main alloying constituent. Typical filler alloys within this series are AA4343, AA4045, AA4047, AA4004, AA4104, AA4047 and AA4147, or some near compositional variants thereof, or 4xxx alloys having a purposive addition of Zn up to 5%, as well as typical protective based on commercially pure aluminium alloys (e.g. AA1xxx-series). The aluminium alloy clad layer(s) is preferably applied by roll bonding as in well known in the art.

In an embodiment the rolled fin stock material is provided in a bare form, thus devoid of any metallic layers, such as for example a 4xxx-series brazing clad layer, on its outer surface.

At final gauge the rolled fin stock material is typically at a gauge in the range of 0.02 mm to 1.0 mm, preferably from 0.02 mm to 0.3 mm. A preferred lower-limit for the gauge is 0.03 mm. A preferred upper-limit for the gauge is 0.2 mm, more preferably 0.15 mm, and most preferably 0.10 mm.

In the pre-braze condition the rolled fin stock material is typically provided in an H1x or H2x temper, wherein x has a value from 1 to 9, such as for example the H14, H18, H22, H24 and H26 temper.

In an aspect of the invention there is provided in a brazed assembly, typically a heat exchanger, comprising the rolled fin stock material of the invention. In such a heat exchanger having the rolled fin stock material of the invention as corrugated fins, the fins may act as a sacrificial anode. The brazed heat exchanger typically comprises at least one tank structured to hold a coolant; a header plate coupled to said at least one tank, said header plate including a plurality of apertures; a plurality of substantially parallel fluid-carrying tubes each extending substantially perpendicular from one of said plurality of apertures in said header plate and structured to receive said coolant therethrough; and a plurality of fins, said fins being in thermal communication with said plurality of fluid-carrying tubes and structured to transfer heat away therefrom, in order to cool said coolant as it circulates therein, said plurality of fins being made from the rolled fin stock material as herein disclosed and claimed.

The heat exchangers incorporating the rolled stock material according to this invention can be used widely in the transportation industries, such as the automotive industry, for powertrain cooling and HVAC&R applications, as well as for domestic and industrial cooling purposes, e.g. for fluid processing and HVAC&R applications.

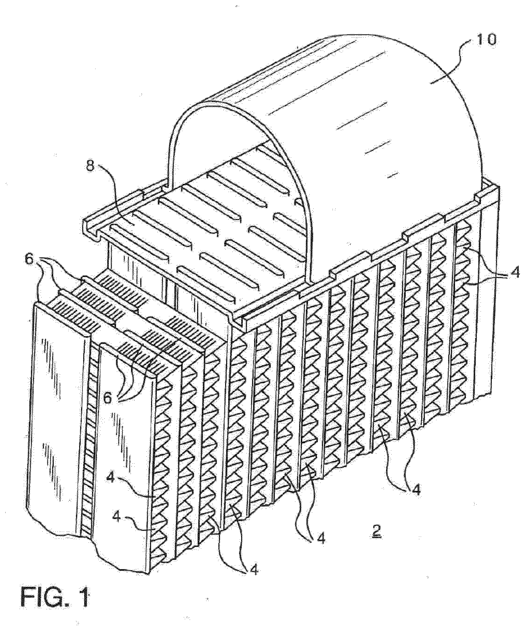

Fig. 1 is an isometric view of a portion of a brazed heat exchanger.

As shown in Fig. 1, a brazed aluminium heat exchanger 2 in accordance with the present invention includes a plurality of fluid-carrying tubes 6. The ends of the fluid-carrying tubes 6 are open to a header plate 8 and a tank 10 (one end of the fluid-carrying tubes 6, one header plate 8 and one tank 10 are shown in Fig.1). Coolant is circulated from the tank 10, through the fluid-carrying tubes 6 and into another tank (not shown). As shown, a plurality of cooling fins 4, made from the rolled fin stock material according to this invention, are disposed between the fluid-carrying tubes 6, in order to transfer heat away therefrom thereby facilitating a heat exchange cooling the fluid therein.

## Claims

1. A rolled fin stock material from an 3xxx-series aluminium alloy comprising, in wt.%,
| | |
|---|---|
| Mn | 1.3% to 2.0%, |
| Si | 0.4% to 1.5%, |
| Zn | up to 4%, preferably 0.35% to 3%, |
| Fe | up to 0.8%, |
| Zr | 0.02% to 0.40%, |
| Sc | 0.01% to 0.6%, |
| Ni | up to 0.3%, preferably less than 0.05%, |
| Cu | up to 0.5%, |
| Mg | up to 2%, |
| Cr | up to 0.3%, |
| Ti | up to 0.3%, |
the balance aluminium and tolerable impurities, each up to 0.05% and in total up to 0.25%.

2. A rolled fin stock material according to claim 1, wherein the Sc content is at least 0.05%, and preferably at least 0.12%; and/or
wherein the Sc content is maximum 0.4%, and preferably maximum 0.30%.

3. A rolled fin stock material according to any one of claims 1 or 2, wherein the Zr content is at least 0.06%, and preferably at least 0.08%; and/or
wherein the Zr content is maximum 0.30%, and preferably maximum 0.20%.

4. A rolled fin stock material according to any one of claims 1 to 3,
wherein the Mn content is at most 1.85%.

5. A rolled fin stock material according to any one of claims 1 to 4, wherein the Cu content is maximum 0.30%, preferably maximum 0.20%, and more preferably maximum 0.05%.

6. A rolled fin stock material according to any one of claims 1 to 5, wherein the Mg content is maximum 0.5%, preferably maximum 0.35%, and more preferably maximum 0.10%.

7. A rolled fin stock material according to any one of claims 1 to 6, wherein the Zn content is at least 0.35%, and preferably at least 0.5%, and preferably up to 3%.

8. A rolled fin stock material according to any one of claims 1 to 7, wherein a clad layer is applied on one or both sides of the rolled fin stock material.

9. A rolled fin stock material according to any one of claims 1 to 7, wherein the rolled fin stock material is devoid of any metallic layer(s) applied on either side.

10. A rolled fin stock material according to any one of claims 1 to 9, wherein the fin stock material at final gauge has a thickness of 0.02 mm to 0.3 mm, preferably 0.03 mm to 0.15 mm.

11. A rolled fin stock material according to any one of claims 1 to 10, wherein the fin stock material in the pre-braze condition is provided in an H1x or H2x temper and wherein x is from 1 to 9.

12. A rolled fin stock material according to any one of claims 1 to 11, wherein the fin stock material has been produced by a continuous casting operation.

13. Method of manufacturing a rolled fin stock material according to any one of claims 1 to 12, comprising the steps of casting rolling feedstock, homogenising and/or pre-heating of the rolling feedstock at a temperature in a range of 300°C to 500°C, preferably in the range of 370°C to 480°C, prior to hot rolling to a gauge of 2 mm to 15 mm, cold rolling to final gauge, and optionally annealing of the cold rolled material at final gauge.

14. A brazed assembly of components, comprising a plurality of substantially parallel fluid-carrying tubes and a plurality of fins; said fins being in thermal communication with said plurality of fluid-carrying tubes and structured to transfer heat away therefrom, said plurality of fins comprising a rolled fin stock material according to any one of claims 1 to 12.

15. A brazed assembly of components according to claim 14, wherein the brazed assembly of components is a heat exchanger.

## Patentansprüche

1. Gewalztes Rippenmaterial aus einer Aluminiumlegierung der 3xxx-Serie, umfassend, in Gew.-%,
| | |
|---|---|
| Mn | 1,3% bis 2,0%, |
| Si | 0,4% bis 1,5%, |
| Zn | Zn bis zu 4%, vorzugsweise 0,35% bis 3%, |
| Fe | Fe bis zu 0,8% |
| Zr | 0.02% bis zu 0.40%, |
| Sc | 0.01% bis zu 0.6%, |
| Ni | bis zu 0,3%, vorzugsweise weniger als 0,05%, |
| Cu | up bis zu 0.5%, |
| Mg | up bis zu 2%, |
| Cr | up bis zu 0.3%, |
| Ti | up bis zu 0.3%, |
der Rest Aluminium und tolerierbare Verunreinigungen, jeweils bis zu 0,05% und insgesamt bis zu 0,25%.

2. Gewalztes Rippenmaterial nach Anspruch 1, wobei der Sc-Gehalt
mindestens 0,05%, und vorzugsweise mindestens 0,12% beträgt; und/oder
wobei der Sc-Gehalt maximal 0,4%, und vorzugsweise maximal 0,30% beträgt.

3. Gewalztes Rippenmaterial nach einem der Ansprüche 1 oder 2, wobei der Zr-Gehalt mindestens 0,06%, und vorzugsweise mindestens 0,08% beträgt; und/oder,
wobei der Zr-Gehalt maximal 0,30%, und vorzugsweise maximal 0,20% beträgt.

4. Gewalztes Rippenmaterial nach einem der Ansprüche 1 bis 3, wobei der Mn-Gehalt höchstens 1,85% beträgt.

5. Gewalztes Rippenmaterial nach einem der Ansprüche 1 bis 4, wobei der Cu-Gehalt maximal 0,30%, vorzugsweise maximal 0,20%, und noch bevorzugter maximal 0,05% beträgt.

6. Gewalztes Rippenmaterial nach einem der Ansprüche 1 bis 5, wobei der Mg-Gehalt maximal 0,5%, vorzugsweise maximal 0,35%, und noch bevorzugter maximal 0,10% beträgt.

7. Gewalztes Rippenmaterial nach einem der Ansprüche 1 bis 6, wobei der Zn-Gehalt mindestens 0,35%, vorzugsweise mindestens 0,5%, und vorzugsweise bis zu 3% beträgt.

8. Gewalztes Rippenmaterial nach einem der Ansprüche 1 bis 7, wobei eine plattierte Schicht auf einer oder beiden Seiten des gewalzten Rippenmaterials aufgebracht ist.

9. Gewalztes Rippenmaterial nach einem der Ansprüche 1 bis 7, wobei das gewalzte Rippenmaterial auf beiden Seiten frei von jeglicher/n aufgebrachter/n metallischer/n Schicht(en) ist.

10. Gewalztes Rippenmaterial nach einem der Ansprüche 1 bis 9, wobei das Rippenmaterial in einer Endabmessung eine Dicke von 0,02 mm bis 0,3 mm, vorzugsweise 0,03 mm bis 0,15 mm, aufweist.

11. Gewalztes Rippenmaterial nach einem der Ansprüche 1 bis 10, wobei das Rippenmaterial in dem vorgelöteten Zustand in einem H1x- oder H2x-Temper bereitgestellt ist, und wobei x von 1 bis 9 ist.

12. Gewalztes Rippenmaterial nach einem der Ansprüche 1 bis 11, wobei das Rippenmaterial in einem Stranggussverfahren hergestellt worden ist.

13. Verfahren zur Herstellung eines gewalzten Rippenmaterials nach einem der Ansprüche 1 bis 12, umfassend die Schritte eines Gießens von Walz-Rohmaterial, Homogenisieren und/oder Vor-Heizen des Walz-Rohmaterials bei einer Temperatur in einem Bereich von 300 °C bis 500 °C, vorzugsweise in dem Bereich von 370 °C bis 480 °C, vor einem Warmwalzen zu einer Dicke von 2 mm bis 15 mm, Kaltwalzen auf eine endgültige Dicke, und gegebenenfalls Glühen des kaltgewalzten Materials bei endgültiger Dicke.

14. Gelötete Anordnung von Komponenten, umfassend eine Vielzahl von im Wesentlichen parallelen fluidführenden Rohren und eine Vielzahl von Rippen; wobei die Rippen in thermischer Verbindung mit der Vielzahl von fluidführenden Rohren stehen und so strukturiert sind, dass sie Wärme von diesen wegleiten, wobei die Vielzahl von Rippen ein gewalztes Rippenmaterial nach einem der Ansprüche 1 bis 12 umfasst.

15. Gelötete Anordnung von Komponenten nach Anspruch 14, wobei die gelötete Anordnung von Komponenten ein Wärmeaustauscher ist.

## Revendications

1. Matériau laminé pour ailettes d'un alliage d'aluminium de la série 3xxx comprenant, en % en poids,
| | |
|---|---|
| Mn | 1,3 % à 2,0 %, |
| Si | 0,4 % à 1,5 %, |
| Zn | jusqu'à 4 %, de préférence 0,35 % à 3 %, |
| Fe | jusqu'à 0,8 %, |
| Zr | 0,02 % à 0,40 %, |
| Sc | 0,01 % à 0,6 %, |
| Ni | jusqu'à 0,3 %, de préférence moins de 0,05 %, |
| Cu | jusqu'à 0,5 % |
| Mg | jusqu'à 2 %, |
| Cr | jusqu'à 0,3 %, |
| Ti | jusqu'à 0,3 %, |
le reste étant de l'aluminium et des impuretés tolérables, chacun jusqu'à 0,05 % et au total jusqu'à 0,25 %.

2. Matériau laminé pour ailettes selon la revendication 1, dans lequel la teneur en Sc est d'au moins 0,05 %, et de préférence d'au moins 0,12 % ; et/ou
dans lequel la teneur en Sc est au maximum de 0,4 %, et de préférence au maximum de 0,30 %.

3. Matériau laminé pour ailettes selon l'une des revendications 1 ou 2, dans lequel la teneur en Zr est d'au moins 0,06 %, et de préférence d'au moins 0,08 % ; et/ou
dans lequel la teneur en Zr est au maximum de 0,30 %, et de préférence au maximum de 0,20 %.

4. Matériau laminé pour ailettes selon l'une des revendications 1 à 3,
dans lequel la teneur en Mn est d'au plus 1,85 %.

5. Matériau laminé pour ailettes selon l'une des revendications 1 à 4, dans lequel la teneur en Cu est au maximum de 0,30 %, de préférence au maximum de 0,20 %, et plus préférentiellement au maximum de 0,05 %.

6. Matériau laminé pour ailettes selon l'une des revendications 1 à 5, dans lequel la teneur en Mg est au maximum de 0,5 %, de préférence au maximum de 0,35 %, et plus préférentiellement au maximum de 0,10 %.

7. Matériau laminé pour ailettes selon l'une des revendications 1 à 6, dans lequel la teneur en Zn est d'au moins 0,35 %, de préférence d'au moins 0,5 %, et de préférence jusqu'à 3 %.

8. Matériau laminé pour ailettes selon l'une des revendications 1 à 7, dans lequel une couche de placage est appliquée sur l'une ou les deux faces du matériau laminé pour ailettes.

9. Matériau laminé pour ailettes selon l'une des revendications 1 à 7, dans lequel le matériau laminé pour ailettes est dépourvu de couche(s) métallique(s) appliquée(s) sur les deux faces.

10. Matériau laminé pour ailettes selon l'une des revendications 1 à 9, dans lequel le matériau pour ailettes à la jauge finale a une épaisseur de 0,02 mm à 0,3 mm, de préférence de 0,03 mm à 0,15 mm.

11. Matériau laminé pour ailettes selon l'une des revendications 1 à 10, dans lequel le matériau pour ailettes à l'état pré-brasé est fourni dans un état H1x ou H2x et dans lequel x est compris entre 1 et 9.

12. Matériau laminé pour ailettes selon l'une des revendications 1 à 11, dans lequel le matériau pour ailettes a été produit par une opération de coulée continue.

13. Procédé de fabrication d'un matériau laminé pour ailettes selon l'une des revendications 1 à 12, comprenant les étapes suivantes : coulée de la charge de laminage, homogénéisation et/ou préchauffage de la charge de laminage à une température comprise entre 300 °C et 500 °C, de préférence entre 370 °C et 480 °C, avant le laminage à chaud à une épaisseur comprise entre 2 mm et 15 mm, le laminage à froid à l'épaisseur finale, et éventuellement le recuit du matériau laminé à froid à l'épaisseur finale.

14. Assemblage brasé de composants, comprenant une pluralité de tubes de transport de fluide sensiblement parallèles et une pluralité d'ailettes ; lesdites ailettes étant en communication thermique avec ladite pluralité de tubes de transport de fluide et structurées pour transférer la chaleur à partir de ceux-ci, ladite pluralité d'ailettes comprenant un matériau laminé pour ailettes selon l'une des revendications 1 à 12.

15. Assemblage brasé de composants selon la revendication 14, dans lequel l'assemblage brasé de composants est un échangeur de chaleur.
